Europäisches Patentamt

European Patent Office

Office européen des brevets

(11) Veröffentlichungsnummer: **0 447 782 A2**

# EUROPÄISCHE PATENTANMELDUNG

(21) Anmeldenummer: 91101756.4

(22) Anmeldetag: 08.02.91

(51) Int. Cl.5: **G01G 3/14**

(30) Priorität: 15.03.90 DE 4008309

(43) Veröffentlichungstag der Anmeldung:
25.09.91 Patentblatt 91/39

(84) Benannte Vertragsstaaten:
**AT DE ES FR GB IT NL SE**

(71) Anmelder: **Bizerba-Werke Wilhelm Kraut GmbH & Co. KG.**
**Wilhelm-Kraut-Strasse 41**

**W-7460 Balingen 1(DE)**

(72) Erfinder: **Selig, Klaus Peter, Dr.-Ing.**
**Joseph-Wilhelm-Weg 13**
**W-7450 Hechingen(DE)**

(74) Vertreter: **Hoeger, Stellrecht & Partner**
**Uhlandstrasse 14 c**
**W-7000 Stuttgart 1(DE)**

(54) **Biegekraftaufnehmer, insbesondere für Waagen.**

(57) Ein Biegekraftaufnehmer, insbesondere für Waagen, umfaßt einen wenigstens zwei Lenkerarme und vier Gelenke aufweisenden Parallelogramm-Lenker sowie Dehnungsmeßelemente, die im Bereich der durch die Gelenke gebildeten Biegezonen auf einer äußeren Oberfläche lediglich eines der Lenkerarme angeordnet sind. An einem der Lenkerarme ist ein zusätzliches Hilfsgelenk ausgebildet, das mit den beiden anderen Gelenken dieses Lenkerarmes ein nichtlineares Federelement bildet, durch welches ein an den Dehnungsmeßelementen entstehender Linearitätsfehler kompensierbar ist.

FIG.1

Die Erfindung betrifft einen Biegekraftaufnehmer, insbesondere für Waagen, mit einem wenigstens zwei Lenkerarme und vier Gelenke aufweisenden Parallelogramm-Lenker und mit Dehnungsmeßelementen, die im Bereich der durch die Gelenke gebildeten Biegezonen auf einer äußeren Oberfläche lediglich eines der Lenkerarme angeordnet sind.

Bei Biegekraftaufnehmern dieser Art (einseitige Applikation der Dehnungsmeßelemente) tritt außer dem bei allen Parallelogramm-Lenker-Kraftaufnehmern vorhandenen, durch mechanische Abgleichmaßnahmen korrigierbaren Ecklastfehler ein weiterer Fehler auf. Dieser Fehler äußert sich als Linearitätsfehler, dessen Größe und Vorzeichen von der Position der Last auf der Lastschale der Waage abhängt (genauer, von den hierdurch erzeugten, auf den Biegekraftaufnehmer wirkenden Momenten).

Wegen dieser Abhängigkeit ist eine Korrektur dieses Fehlers in der Meßwertverarbeitung (wie sonst bei Linearitätsfehlern üblich) nicht möglich.

Konstruktiv könnte dieser Fehler vermieden werden durch

a. Applikation der Dehnungsmeßelemente auf beiden Seiten des Parallelogramm-Lenkers (je 1 Dehnungsmeßelement auf je einem Gelenk des Parallelogramm-Lenkers). Dies ist eine weit verbreitete Bauart, eine solche Art der Anordnung der Dehnungsmeßelemente ist etwa aus der EP-A-67664 bekannt.

b. Trennung von Parallelogramm-Lenker und Biegekraftaufnehmer in Form separater Teile sowie eine geeignete Krafteinleitung um diese Teile momentenfrei miteinander zu verbinden. Eine solche Lösung ist in EP-B1-80702 beschrieben. Die dort vorgesehenen zusätzlichen Schwachstellen in den Lenkerarmen bewirken eine Verringerung des normalen Ecklastfehlers.

Beide Ausführungen von Biegekraftaufnehmern haben jedoch den Nachteil eines höheren Fertigungsaufwandes.

Die Verwendung gattungsgemäßer Biegekraftaufnehmer mit Applikation der Dehnungsmeßelemente auf nur einer Seite des Parallelogramm-Lenkers ist zur Zeit auf Anwendungen geringerer Auflösung beschränkt.

Ein Biegekraftaufnehmer der eingangs genannten Art ist beispielsweise aus EP-A1-248965 bekannt. Er dient insbesondere zur Verwendung in Waagen und besteht aus einem Federkörper, der sich bei Beaufschlagung mit der zu messenden Kraft in geeigneter Weise verformt. Die dabei an der Oberfläche des Biegekraftaufnehmers auftretende Dehnung wird über die Dehnungsmeßelemente, gewöhnlich Dehnungsmeßstreifen, in ein elektrisches Signal umgesetzt.

Der bekannte Biegekraftaufnehmer hat die Bauform eines Biegebalkens mit einer Aussparung in Längsrichtung, so daß sich ein sogenannter Parallelogramm-Lenker mit vier Gelenken ergibt, wobei zwischen jeweils zwei Gelenken ein Lenkerarm ausgebildet ist.

Bei solchen Biegekraftaufnehmern ist es vorteilhaft, vier Dehnungsmeßelemente (Dehnungsmeßstreifen) zu einer elektrischen Wheatstone-Vollbrücke zu verschalten. Je zwei Dehnungsmeßelemente sind auf jeweils einem der Gelenke des obenliegenden Lenkerarms angeordnet.

Die bekannten Biegekraftaufnehmer dieser Art weisen, wenn sie in Waagen eingebaut sind, einen von der Position der Last auf der Waage abhängigen Linearitätsfehler auf. Für hohe Auflösungen war die bislang erzielte Verringerung dieses Linearitätsfehlers jedoch nicht ausreichend, und zwar selbst dann, wenn die den Biegekraftaufnehmer bildenden Federkörper mit hoher Genauigkeit gefertigt wurden.

Es ist Aufgabe der Erfindung, einen gattungsgemäßen Biegekraftaufnehmer so zu verbessern, daß ein bestehender Linearitätsfehler auch für hoch auflösende Anwendungen ausreichend reduzierbar ist und gleichzeitig die hierfür aufzuwendenden Maßnahmen verhältnismäßig einfach durchführbar sind.

Die Aufgabe wird erfindungsgemäß dadurch gelöst, daß an einem der Lenkerarme ein zusätzliches Hilfsgelenk ausgebildet ist, das mit den beiden anderen Gelenken dieses Lenkerarms ein nichtlineares Federelement bildet, durch welches ein an den Dehnungsmeßelementen entstehender Linearitätsfehler kompensierbar wird.

Der erfindungsgemäße Biegekraftaufnehmer weist also auf der Außenseite seines die vier Dehnungsmeßelemente einer Wheatstone-Brücke tragenden Lenkerarms nicht, wie bisher üblich vier Gelenkstellen, sondern fünf Gelenkstellen auf. Durch die Einführung des zusätzlichen fünften "Hilfsgelenks", das im Zusammenwirken mit den beiden anderen, am gleichen Lenkerarm befindlichen Gelenken das nichtlineare Federelement bildet, ist es zum einen möglich, den erwähnten Linearitätsfehler praktisch völlig zu eliminieren. Zum andern kann durch die Platzierung des Hilfsgelenkes an einer geeigneten Stelle des Lenkerarms ein Feinabgleich des in Rede stehenden Fehlers durchgeführt werden, ohne daß sich dabei andere Parameter des Kraftaufnehmers ändern. Da sich das Hilfsgelenk in einfachster Weise, insbesondere in Form einer einfachen Schwachstelle, am Lenkerarm ausbilden läßt, ist der Aufwand für die erreichbare, hochgenaue Fehlerkorrektur verhältnismäßig gering.

Die nachstehende Beschreibung bevorzugter Ausführungsformen der Erfindung dient im Zusammenhang mit beiliegender Zeichnung der weiteren Erläuterung. Es zeigen:

Fig. 1 schematisch einen Biegekraftaufnehmer in Form eines Parallelogramm-Lenkers;

Fig. 2 eine Ansicht ähnlich Fig. 1 einer abgewandelten Ausführungsform eines Biegekraftaufnehmers und

Fig. 3 eine dritte Ausführungsform eines Biegekraftaufnehmers.

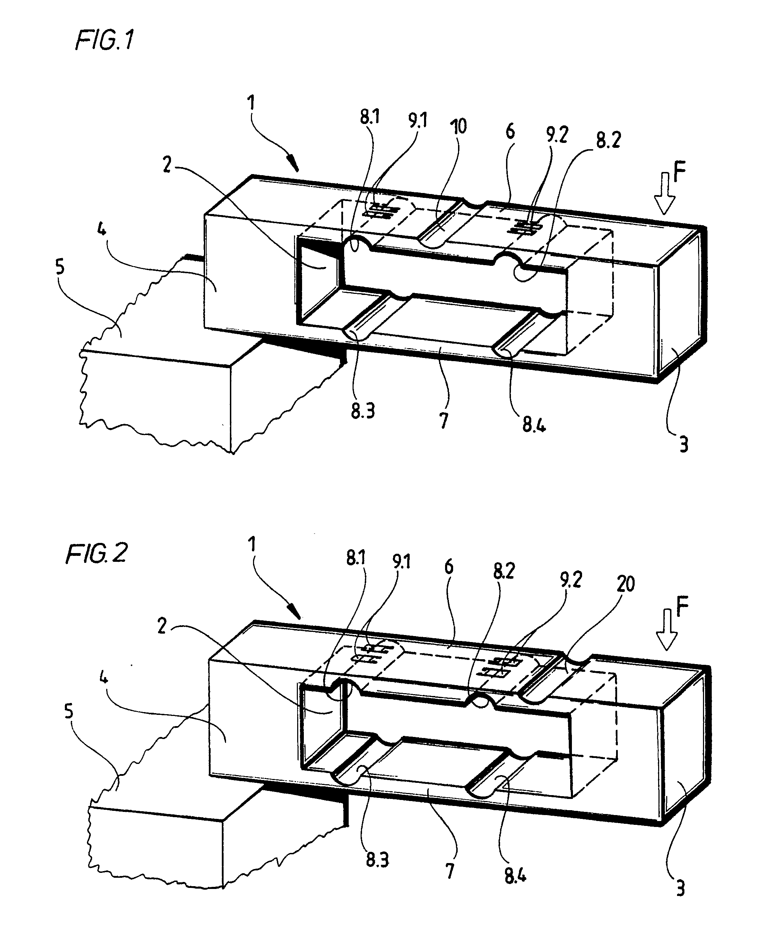

Die Fig. 1 zeigt schematisch einen Biegekraftaufnehmer 1 in Form eines Biegebalkens mit einer längsgerichteten, durchgehenden Aussparung 2. Der Biegekraftaufnehmer umfaßt einen Krafteinleitungsteil 3, in den eine Kraft F, beispielsweise eine Wägekraft, eingeleitet werden kann. Mit einem Befestigungsteil 4 ist der Biegekraftaufnehmer 1 stationär und frei abstehend an einer ortsfesten Halterung 5, beispielsweise einem Waagengestell, befestigt. Aufgrund der durchgehenden Aussparung 2 sind der Krafteinleitungsteil 3 und der Befestigungsteil 4 durch zwei horizontale, parallel zueinander verlaufende Lenkerarm 6, 7 miteinander verbunden. Im Bereich der Aussparung 2 sind durch entsprechende quer durchgehende Ausnehmungen vier Gelenke 8.1, 8.2, 8.3 und 8.4 vorgesehen. Der Lenkerarm 6 liegt zwischen den Gelenken 8.1 und 8.2, der Lenkerarm 7 zwischen den Gelenken 8.3 und 8.4. Die gesamte Anordnung bildet auf diese Weise einen Parallelogramm-Lenker an sich bekannter Art. An der Außenseite des oberen Lenkerarms 6 sind über den Gelenken 8.1 und 8.2 jeweils zwei Dehnungsmeßelemente 9.1 bzw. 9.2 in Gestalt von an sich bekannten Dehnungsmeßstreifen angeordnet. Jedem Gelenk sind also zwei Dehnungsmeßelemente zugeordnet, die in an sich bekannter und daher nicht dargestellter Weise zu einer Wheatstone-Vollbrücke zusammengeschaltet sind.

Zwischen den Gelenken 8.1 und 8.2 ist an dem die Dehnungsmeßelemente 9.1, 9.2 tragenden Lenkerarm 6 ein Hilfsgelenk 10 ausgebildet, und zwar vorzugsweise in der Mitte zwischen den Gelenken 8.1 und 8.2. Im Gegensatz zu den Gelenken 8.1 und 8.2 ist das als fünftes Gelenk vorgesehene Hilfsgelenk 10 nicht von der Aussparung 2 her in Richtung nach außen eingearbeitet, sondern von außen her in Richtung auf die Aussparung 2. Hierdurch liegen die eigentlichen Gelenkstellen der Gelenke 8.1, 8.2 und 10 nicht mehr in einer Ebene, so daß ein nichtlineares Federelement entsteht, mit dem der eingangs erwähnte Linearitätsfehler des einseitig mit den Dehnungsmeßelementen 9.1 und 9.2 versehenen Biegekraftaufnehmers in überraschend einfacher Weise kompensiert wird.

Durch das Hilfsgelenk 10 wird erreicht, daß der durch die einseitige Aufbringung der vier Dehnungsmeßelemente 9.1 und 9.2 bedingte Linearitätsfehler praktisch vollständig eliminiert wird, so daß der so modifizierte Biegekraftaufnehmer auch in der hoch auflösenden Wägetechnik eingesetzt werden kann.

Bei der in Fig. 1 dargestellten bevorzugten Ausführungsform der Erfindung ist das Hilfsgelenk 10 in der Mitte zwischen den Gelenken 8.1 und 8.2 angeordnet, also an einer Stelle, an der das Biegemoment Null ist. Aus diesem Grunde ist ein Feinabgleich des hier in Rede stehenden Linearitätsfehlers durch lediglich geringes Nacharbeiten des Hilfsgelenks 10 möglich, ohne daß sich andere wesentlichen Eigenschaften des Biegekraftaufnehmers ändern. Da bei Biegekraftaufnehmern der dargestellten Art ohnehin ein geringfügiges Nacharbeiten der Gelenke 8.1, 8.2, 8.3 und 8.4 zur Kompensation eines sogenannten Eckenfehlers durchgeführt werden muß, bedeutet die Nacharbeitung des Hilfsgelenks 10 nur einen geringen Mehraufwand, erlaubt aber größere Toleranzen bei der Fertigung des Biegekraftaufnehmers. Natürlich kann das z.B. als einfache, quer durchgehende Rille ausgebildete Hilfsgelenk 10 als solches auch - ebenso wie die Gelenkstellen 8.1, 8.2, 8.3 und 8.4 - in verhältnismäßig einfacher Weise hergestellt werden.

Bei der in Fig. 2 dargestellten, abgewandelten Ausführungsform der Erfindung sind für einander entsprechende Teile die gleichen Bezugszeichen wie in Fig. 1 verwendet. Bei dieser Ausführungsform der Erfindung ist jedoch ein Hilfsgelenk 20 nicht zwischen den Gelenken 8.1 und 8.2, sondern zwischen dem Gelenk 8.2 und dem Krafteinleitungsteil 3 angeordnet. Bei wiederum einer anderen (nicht dargestellten) Ausführungsform kann das Hilfsgelenk 20 auch zwischen dem Gelenk 8.1 und dem Befestigungsteil 4 angeordnet werden. Bei den beiden letztgenannten Ausführungsformen erzielt man die gleichen vorteilhaften Wirkungen wie bei der Ausführungsform gemäß Fig. 1.

Die anhand von Fig. 2 beschriebenen Ausführungsformen haben den Vorteil, daß die Oberfläche des oberen Lenkerarms 6 zwischen den Gelenken 8.1 und 8.2 nicht vom Hilfsgelenk 20 unterbrochen ist. Dies ist dann von Vorteil, wenn die Verdrahtung der Dehnungsmeßelemente 9.1 und 9.2 mit einer zwischen ihnen angeordneten und sie teilweise überdeckenden Folie realisiert wird.

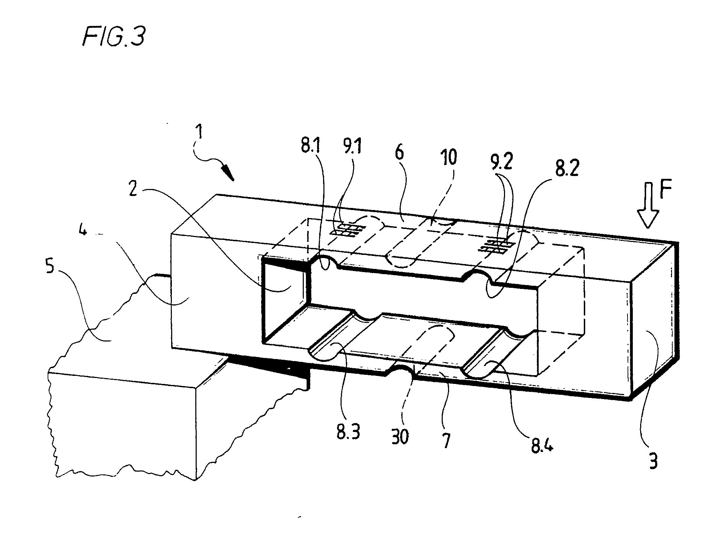

Bei der in Fig. 3 dargestellten, weiterhin abgewandelten Ausführungsform der Erfindung ist ein Hilfsgelenk 30 nicht am oberen, die Dehnungsmeßelemente 9.1 und 9.2 tragenden Lenkerarm 6, sondern am unteren Lenkerarm 7 ausgebildet, der keine Dehnungsmeßelemente trägt. Dabei ist das Hilfsgelenk 30 von einer Seite des unteren Lenkerarms 7 her eingearbeitet, die der Seite, von der her die beiden benachbarten Gelenke 8.3 und 8.4. eingearbeitet sind, gegenüberliegt. Die eigentlichen Gelenkstellen der Gelenke 8.3, 8.4 und 30 liegen also in verschiedenen Ebenen.

Schließlich ist es auch, wie in Fig. 3 gestrichelt angedeutet, möglich, zusätzlich zu dem im unteren Lenkerarm 7 vorgesehenen Hilfsgelenk 30 noch ein weiteres Hilfsgelenk 10 am oberen, mit den Dehnungsmeßelementen 9.1 und 9.2 versehenen Lenkerarm 6 vorzusehen, wobei dieses Hilfsgelenk dem Hilfsgelenk 10 in Fig. 1 entspricht.

Auch bei der Ausführungsform gemäß Fig. 3 läßt sich eine praktisch vollkommene Eliminierung des unerwünschten Linearitätsfehlers erzielen.

## Patentansprüche

1. Biegekraftaufnehmer, insbesondere für Waagen, mit einem wenigstens zwei Lenkerarme und vier Gelenke aufweisenden Parallelogramm-Lenker und mit Dehnungsmeßelementen, die im Bereich der durch die Gelenke gebildetem Biegezonen auf einer äußeren Oberfläche lediglich eines der Lenkerarme angeordnet sind,
**dadurch gekennzeichnet,**
daß an einem der Lenkerarme (6, 7) ein zusätzliches Hilfsgelenk (10, 20, 30) ausgebildet ist, das mit den beiden anderen Gelenken (8.1, 8.2 bzw. 8.3, 8.4) dieses Lenkerarmes ein nichtlineares Federelement bildet, durch welches ein an den Dehnungsmeßelementen (9.1, 9.2) entstehender Linearitätsfehler kompensierbar ist.

2. Biegekraftaufnehmer nach Anspruch 1, dadurch gekennzeichnet, daß das Hilfsgelenk (10) und die beiden am gleichen Lenkerarm (6, 7) angeordneten Gelenke (8.1, 8.2; 8.3, 8.4) nicht in einer Ebene liegen.

3. Biegekraftaufnehmer nach Anspruch 1 oder 2, dadurch gekennzeichnet, daß das Hilfsgelenk (10, 30) in der Mitte zwischen den am gleichen Lenkerarm (6, 7) angeordneten Gelenken (8.1, 8.2; 8.3, 8.4) ausgebildet ist.

4. Biegekraftaufnehmer nach Anspruch 1 oder 2, dadurch gekennzeichnet, daß das Hilfsgelenk (20) außerhalb der beiden am gleichen Lenkerarm (6) angeordneten Gelenke (8.1, 8.2) ausgebildet ist.

5. Biegekraftaufnehmer nach Anspruch 4, dadurch gekennzeichnet, daß das Hilfsgelenk (20) außerhalb desjenigen Gelenks (8.2) ausgebildet ist, das einem Krafteinleitungsteil (3) des Parallelogramm-Lenkers benachbart ist.

6. Biegekraftaufnehmer nach Anspruch 4, dadurch gekennzeichnet, daß das Hilfsgelenk (20) außerhalb desjenigen Gelenks (8.1) ausgebildet ist, das einem stationären Befestigungsteil (4) des Parallelogramm-Lenkers benachbart ist.

7. Biegekraftaufnehmer nach einem der Ansprüche 1 bis 6, dadurch gekennzeichnet, daß das Hilfsgelenk (10, 20) an dem die Dehnungsmeßelemente (9.1, 9.2) tragenden Lenkerarm (6) angeordnet ist.

8. Biegekraftaufnehmer nach einem der Ansprüche 1 bis 6, dadurch gekennzeichnet daß das Hilfsgelenk (30) an einem Lenkerarm angeordnet ist, der keine Dehnungsmeßelemente (9.1, 9.2) trägt.

9. Biegekraftaufnehmer nach einem der vorstehenden Ansprüche, dadurch gekennzeichnet, daß an beiden Lenkerarmen (6, 7) des Parallelogramm-Lenkers Hilfsgelenke (10, 20, 30) ausgebildet sind.

10. Biegekraftaufnehmer nach einem der vorstehenden Ansprüche, dadurch gekennzeichnet, daß die Dehnungsmeßelemente (9.1, 9.2) aus vier Dehnungsmeßstreifen bestehen, die elektrisch zu einer Wheatstone-Vollbrücke zusammengeschaltet sind.

FIG.1

FIG.2

FIG.3